# EUROPÄISCHE PATENTSCHRIFT

(11) **EP 0 751 890 B1**
(45) Veröffentlichungstag und Bekanntmachung des Hinweises auf die Patenterteilung: **30.01.2002**
(21) Anmeldenummer: 95912125.2
(22) Anmeldetag: 03.03.1995
(51) Int. Cl.: B60T 17/00

(54) **TROCKNUNGSPATRONE FÜR LUFTTROCKNUNGSANLAGEN, INSBESONDERE FÜR DRUCKLUFTBREMSANLAGEN VON FAHRZEUGEN**
DRYING CARTRIDGE FOR AIR DRYING INSTALLATIONS, ESPECIALLY FOR VEHICLE COMPRESSED-AIR BRAKING SYSTEMS
CARTOUCHES DE SECHAGE POUR INSTALLATIONS DE SECHAGE A L'AIR, NOTAMMENT POUR SYSTEMES DE FREINAGE A AIR COMPRIME DE VEHICULES

(30) Priorität: 22.03.1994 DE 4409871
(43) Veröffentlichungstag der Anmeldung: 08.01.1997
(73) Patentinhaber: KNORR-BREMSE Systeme für Nutzfahrzeuge GmbH, 80809 München (DE)
(72) Erfinder: HATZ, Wolfgang, D-80933 München (DE); TSCHEWIK, Herbert, D-85778 Haimhausen (DE); UNGER, Hans, D-85716 Unterschleissheim (DE)
(86) Internationale Anmeldenummer: DE9500298
(87) Internationale Veröffentlichungsnummer: WO9525655

(56) Entgegenhaltungen:
- EP-A- 0 275 201
- DE-A- 3 232 742

## Beschreibung

Bei Trocknungspatronen der in Rede stehenden Art (z.B. nach DE-PS 32 32 742), welche ihrer Verwendung nach als "Wegwerfpatrone" bezeichnet werden, ist an der Unterseite eines Topfes ein Stirndeckel befestigt, z.B. durch eine Bördelverbindung, wobei der Stirndeckel mittig ein Gewinde zum Fixieren der Patrone an einem Trocknergehäuse aufweist. Es sind Mittel vorhanden, welche verhindern, daß das Granulat bzw. Trocknungsmittel durch die Mitte nach außen entweichen kann; somit ist die Trocknungspatrone ohne besondere Vorkehrungen handhabbar, d.h. sie kann nach dem Abschrauben vom Trocknergehäuse zwischengelagert oder als Wegwerfteil verwendet werden. Die für derartige Trocknungspatronen zur Anwendung gelangenden Stirndeckel bzw. deren Bördelverbindungen mit dem Topf der Trocknungspatrone sind als aufwendig hinsichtlich des Materials und hinsichtlich der Materialstärke zu bezeichnen. Eine getrennte Entsorgung des Filter- und Granulatmaterials bzw. die Wiederverwendung der in der Trocknungspatrone befindlichen weiteren Einzelteile ist infolge der unlösbaren Bördelverbindung nur mit unverhältnismäßig hohem Aufwand möglich; die Trocknungspatrone ist demnach ausschließlich als Wegwerfteil in Benutzung.

Bei einer desweiteren bekannten Anordnung (EP-A1-0 275 201, die sämtliche Merkmale des Oberbegriff des Anspruchs 1 offenbart) ist in vergleichbarer Weise eine Trocknungspatrone vorgesehen, bei welcher eine axialmittig die Patrone durchsetzende, im Bereich des Patronenkopfes einen Mehrkant aufweisende Schraube verwendet wird, um die Trocknungspatrone gegenüber einem mittigen Ansatz des Trocknergehäuses zu verschrauben. Es ist ein Außentopf vorgesehen (Figur 4), innerhalb welchem die Bestandteile der Lufttrocknungsanlage einschließlich einer zum Vorspannen des Trocknungsmittels dienenden Druckfeder enthalten sind. Der Außentopf bildet einen wesentlichen Bestandteil der im Inneren befindlichen Lufttrocknungsanlage, da er zur Strömungsführung der innenseitig nach oben strömenden, zu trocknenden Luft dient, wobei vorzugsweise am Innenumfang des Außentopfes ein Vorfilter angeordnet ist. Bei einem Austausch derartiger Lufttrocknungspatronen ist der Außentopf als Bestandteil der Trocknungsanlage einschließlich aller darin befindlichen Elemente vom Trocknergehäuse abzubauen, derart, daß die Trocknungspatrone als Einheit an den Ort der Regeneration und Aufbereitung des Trocknungsmittels transportiert werden kann. Sollte eine Demontage der Trocknungspatrone an Ort und Stelle erfolgen, so ist mit dem beträchtlichen Problem der Entspannung der zum Verdichten des Trocknungsmittels dienenden Druckfeder zu rechnen.

Beim Einsatz von Trocknungspatronen erlangen die Forderung nach möglichst weitgehender Umweltverträglichkeit in zunehmendem Maße Bedeutung. So ist es infolge der Rost-Langzeitwirkung unerwünscht, verunreinigte, d.h. mit Ölpartikeln angereicherte Trocknungspatronen in größerer Anzahl als Wegwerfteile zu lagern und einer Deponie zuzuführen. Sollten derartige Trocknungspatronen zur Vermeidung einer zu massiven Umweltverschmutzung der Wiederaufbereitung zugeführt werden, so ist ein möglichst einfacher Aufbau und eine unproblematische Handhabung beim Öffnen der Patrone erwünscht.

Davon ausgehend besteht die Aufgabe der Erfindung darin, eine Trocknungspatrone der in Rede stehenden Art so auszugestalten, daß eine vereinfachte Handhabung am Fahrzeug ermöglicht ist. Es soll sichergestellt sein, daß die Trocknungspatrone bzw. Bestandteile derselben nach dem Lösen vom Trocknergehäuse als bauliche Einheit gehandhabt und der Wiederaufbereitung zugeführt werden können, ohne daß Filter- oder Granulatmaterial aus dem Inneren der Patrone entweicht.

Zur Lösung dieser Aufgabe dienen die Merkmale nach Patentanspruch 1.

Durch Verwendung des als eine vormontierte Einheit in den Außentopf einsetzbaren, Trockenmittel enthaltenden Innentopfes ist ein einfacher Austausch am Fahrzeug möglich, d.h. der Innentopf mit dem darin befindlichen Vorfilter und dem Granulatmaterial kann nach längerem Gebrauch durch einen neuen Innentopf mit neuer Füllung ersetzt werden, ohne daß am Ort des Einsatzes eine Innentopf-Demontage mit den Problemen des Entweichens von Granulatmaterial und des Entspannens der Druckfeder in Kauf zu nehmen ist. Da die Druckfeder in ihrer Spannlage im Inneren des Innentopfes verbleibt, sind keine besonderen Maßnahmen zum Entspannen der Feder nötig. Nach Einsetzen eines neuen Innentopfes in den Außentopf ist das Montieren der Patrone am Lufttrocknergehäuse in einfacher Weise mit Hilfe der zentral die Patrone durchsetzenden Schraube ermöglicht. Auf diese Weise ist ein hoher Anteil der Bestandteile der Patrone wiederverwendbar; der Innentopf ist recyclebar, d.h. wesentliche Bestandteile des Innentopfes sind nach Austausch von Vorfilter und Trockenmaterial wieder verwendungsfähig.

Die Aufteilung des Inneren des Innentopfes in zwei Kammern erweist sich in gleicher Weise als sehr vorteilhaft, da der bei herkömmlichen Trocknungspatronen übliche äußere Durchströmungsraum zwischen Außenwand des Innentopfes und Innenwand des Außentopfes entfällt, d.h. der Außentopf ist lediglich zur bündigen Aufnahme des Innentopfes und zur Montage am Trocknergehäuse vorgesehen.

Vorteilhafte Ausgestaltungen und Weiterbildungen sind in weiteren Patentansprüchen aufgeführt.

Die Erfindung ist nachfolgend anhand von Ausführungsbeispielen unter Bezugnahme auf die beigefügte Zeichnung erläutert.
Figur 1 ist eine halbierte Schnittansicht der Trocknungspatrone nach der Erfindung; und
Figur 2 ist eine der Figur 1 vergleichbare Ansicht einer Trocknungspatrone nach einer weiteren Ausführungsform der Erfindung.

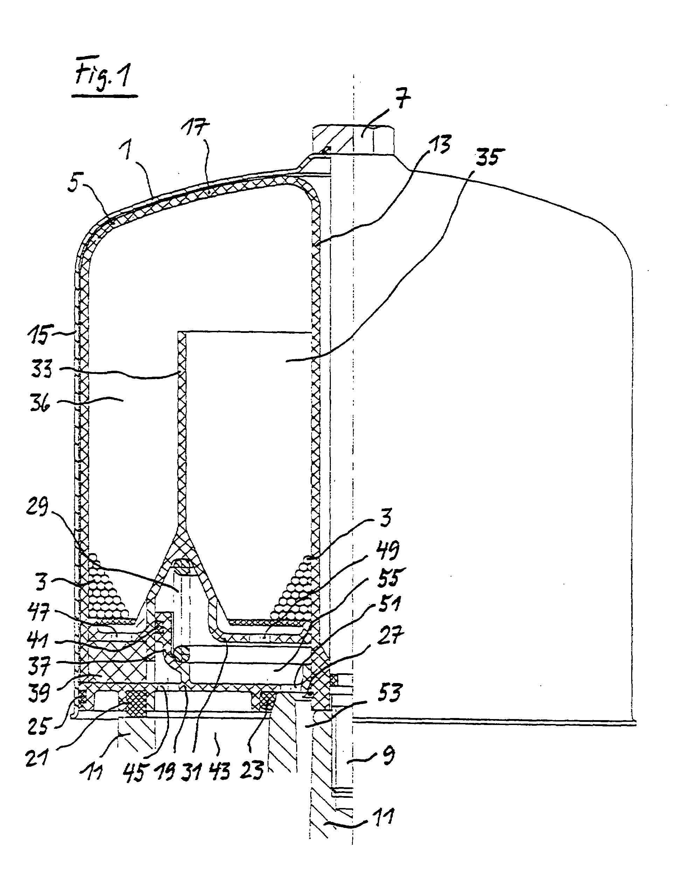

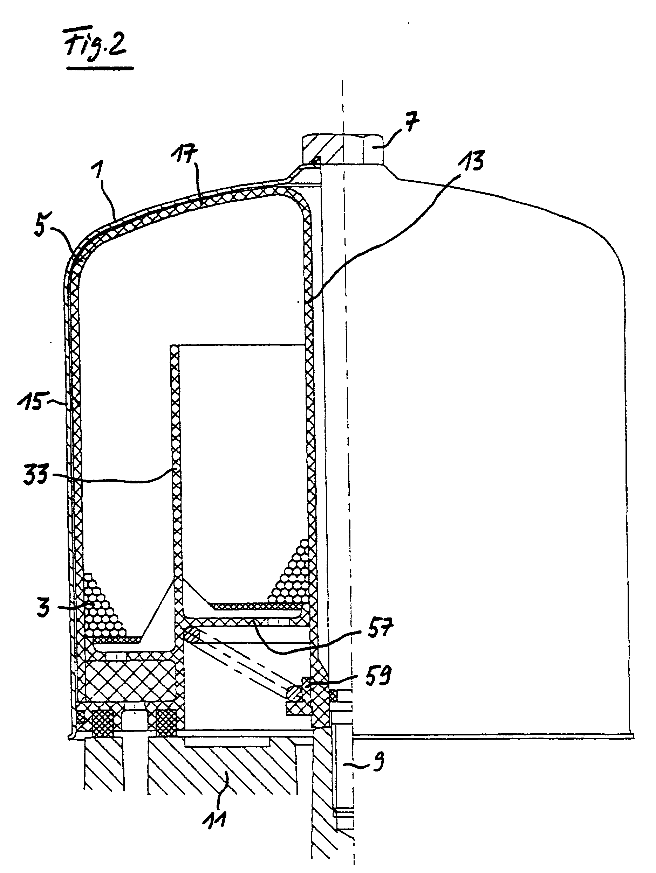

Die in der Zeichnung dargestellte Trocknungs- bzw. Filterpatrone gemäß der Erfindung weist einen Außentopf 1 auf, innerhalb welchem sich ein Trockenmittel 3 enthaltender Innentopf 5 befindet. Eine Schraube 7 erstreckt sich zentral durch die Trocknungspatrone, wobei das am unteren Ende der Schraube befindliche Gewinde 9 zum Verschrauben der Trocknungspatrone mit dem in der Zeichnung (Figur 1 und 2) teilweise wiedergegebenen Trocknergehäuse 11 dient. Der Innentopf 5 ist von ringscheibenförmigem Querschnitt, d.h. in Längsschnittansicht sind ein Innenzylinder 13 und ein Außenzylinder 15 vorgesehen, welche mit einem Dachabschnitt 17 miteinander in Verbindung stehen. Der Innentopf ist in der aus Figur 1 und 2 der Zeichnung ersichtlichen Weise eng an die Kontur des Außentopfes 1 angelegt, so daß im wesentlichen kein Zwischenraum zwischen Innen- und Außentopf existiert.

Bei der Ausführungsform nach Fig. 1 ist an der Basis des Innentopfes 5 ein Deckel 19 vorgesehen, welcher mittels zweier Dichtungsringe 21 und 23 auf dem Trocknergehäuse 11 aufliegt und bei angezogener Schraube 7 die Außenluft gegenüber dem Innengehäuse abdichtet. Ein weiterer Dichtungsring 25 am Außenumfang des Deckels 19 dichtet gegenüber der Innenwand des Außentopfes 1. Mittels eines Sicherungsringes 27 ist der eine Druckfeder 29 abstützende Deckel 19 am Außenumfang des Innenzylinders 13 gehalten, derart, daß der Innentopf als gesonderte Einheit gehandhabt werden kann, wenn er in nachfolgend beschriebener Weise vom Außentopf 1 gelöst wird.

Oberhalb des Deckels 19 befindet sich im Inneren des Innentopfes 5 ein Boden 31 mit einer von diesem axial sich erstreckenden Trennwand 33. Die Trennwand 33 unterteilt das Innere des Innentopfes in eine innere Kammer 35 und eine äußere Kammer, 36. Die beiden Kammern besitzen gleichen Strömungsquerschnitt und dienen zur Aufnahme des Trockenmittels 3, welches mit Hilfe der Druckfeder 29 bzw. des von der Druckfeder beaufschlagten Bodens 31 verdichtet wird. Die Druckfeder 29 stützt sich einerseits an einem vom Deckel 19 auskragenden Ansatz 37 und andererseits in einer Vertiefung des Bodens 31 ab d.h. die Druckfeder 29 ist Bestandteil des Innentopfes.

Zwischen Deckel 19 und Boden 31 befindet sich in Anlage zum Außenzylinder 15 ein herkömmlicher Vorfilter 39. Da der die Druckfeder 29 tragende Ansatz 37 mittels eines Dichtungsringes 41 gegenüber dem Boden abdichtet, ist die den Vorfilter aufnehmende Kammer gegenüber der die Druckfeder aufnehmenden Kammer abgedichtet. Die zu trocknende Luft gelangt gemäß Pfeildarstellung aus der Kammer 43 des Trocknergehäuse 11 nach Passieren der im Deckel 19 befindlichen Öffnung 45 in den Vorfilter, von wo sie nach Grobreinigung eine weitere Öffnung 47 im Boden 41 passiert und in das Innere der mit Trockenmittel (in der Zeichnung nur teilweise gefüllt dargestellt) enthaltenden Kammer 36 gelangt. Die Luft wird innerhalb des Trockenmittels um die Oberkante der Trennwand 35 herumgeleitet und verläßt schließlich durch die Öffnung 49 des Bodens 31 die Kammer 35. Die getrocknete Luft passiert nachfolgend eine weitere Öffnung 51 im Deckel und tritt in die Kammer 53 des Trocknergehäuses ein, wo sie weiterer Verwendung zugeführt wird. Die Druckfeder 29 befindet sich in dem radial innerhalb des Dichtungsringes 41 ausgebildeten Raum 55 zwischen Deckel und Boden, d.h. die Druckfeder ist getrockneter Luft ausgesetzt und somit weniger korrosionsgefährdet.

Die erfindungsgemäße Patrone ist in sehr einfacher Weise einsetzbar, da der Innentopf 5 eine vormontierte Einheit bildet, innerhalb welcher sich die Druckfeder befindet. Der Austausch des Innentopfes kann am Fahrzeug vollzogen werden, wobei nach dem Lösen der Schraube 7 die aus Innentopf und Außentopf bestehende Patrone vom Trocknergehäuse abgehoben wird; der Innentopf kann als Einheit aus dem Außentopf herausgezogen werden, ohne daß besondere Maßnahmen zur Sicherung der Druckfeder erforderlich wären. Nach der Entnahme des Innentopfes kann ein neuer, mit regeneriertem Trockenmittel versehener Innentopf in den Außentopf wieder eingesetzt werden, wonach die aus Innentopf und Außentopf bestehende Patrone auf das Trocknergehäuse aufgebracht und abschließend die Schraube eingeführt und angezogen wird, derart, daß die Abdichtung gegenüber dem Trocknergehäuse herbeigeführt ist.

Die in Figur 2 der Zeichnung dargestellte Ausführungsform ist wie die Ausführungsform nach Figur 1 so ausgebildet, daß der Innentopf als vormontierte Einheit vorgesehen und handhabbar ist. Im Gegensatz zur Konstruktion nach Figur 1 ist ein dem Deckel 19 vergleichbares Bauteil nicht vorgesehen, d.h. der Boden 57 der Patrone nach Figur 2 ist zugleich als Deckel ausgebildet und bildet den Verschluß der Unterseite des Innentopfes, wobei der Vorfilter 39 in einer der Ausführungsform nach Figur 1 vergleichbaren Weise zwischen einem Deckel- und einem Bodenteil festgehalten ist. Die Druckfeder 29 stützt sich einerseits am Boden 57 und andererseits an einem Sicherungsring 59 ab, welcher an der Außenwand des Innenzylinders 13 fixierbar ist. Die Strömungsbahn der zu trocknenden Luft ist in einer der Ausführungsform nach Figur 1 vergleichbaren Weise ausgebildet, d.h. die Druckfeder 29 ist in trockener Luft geführt und somit gegen Korrosion geschützt.

Die als eine Einheit vormontierten Innentöpfe 5 der Ausführungsform nach Figur 1 und 2 sind nach Gebrauch, d.h. nach Austausch recyclebar, wobei nach Demontage des Sicherungsrings 57 bzw. 59 die Einzelteile aus dem Innentopf herausgenommen und gegebenenfalls gereinigt werden, wobei sowohl der Vorfilter als auch das Trockenmittel entweder regeneriert oder ersetzt werden können. In jedem Fall ermöglicht die vormontierte Einheit des Innentopfes einen schnellen Wechsel an Ort und Stelle, d.h. am Fahrzeug selbst, ohne daß die bei bekannten Lufttrocknungspatronen bestehenden Probleme der Demontage in Kauf genommen werden müßten.

### Bezugszeichenliste

- 1: Außentopf
- 3: Trockenmittel
- 5: Innentopf
- 7: Schraube
- 9: Gewinde
- 11: Trocknergehäuse
- 13: Innenzylinder
- 15: Außenzylinder
- 17: Dachabschnitt
- 19: Deckel
- 21: Dichtungsring
- 23: Dichtungsring
- 25: Dichtungsring
- 27: Sicherungsring
- 29: Druckfeder
- 31: Boden
- 33: Trennwand
- 35: Kammer
- 36: Kammer
- 37: Ansatz
- 39: Vorfilter
- 41: Dichtungsring
- 43: Kammer
- 45: Öffnung
- 47: Öffnung
- 49: Öffnung
- 51: Öffnung
- 53: Kammer
- 55: Raum
- 57: Boden
- 59: Sicherungsring

## Patentansprüche

1. Trocknungspatrone für Lufttrocknungsanlagen, insbesondere für Druckluftbremsanlagen von Fahrzeugen, mit einer durchgehenden Befestigungsschraube und einem verschließbaren Boden, mit den Merkmalen :
a) die zur Befestigung an einem Trocknergehäuse (11) der Lufttrocknungsanlage dienende Trocknungspatrone besteht aus einem Außentopf (1) und aus einem, im Außentopf (1) befindlichen, das Trockenmittel für die zu trocknende Druckluft enthaltenden Innentopf (5);
b) dem Trocknergehäuse (11) zugewandt, ist der Innentopf mit einem Verschluß (19; 57) versehen;
**gekennzeichnet durch** folgende Merkmale:
der Innentopf (5) ist im Querschnitt ringscheibenförmig ausgebildet, derart, daß innerhalb des Außentopfes (1) ein innenseitig an den Außentopf (1) angelegter Außenzylinder (15) mittels eines an einen Dachabschnitt des Außentopfes angelegten Dachabschnittes (17) mit einem koaxial sich erstreckenden Innenzylinder (13) verbunden ist;
d) der Innenzylinder (13) umschließt einen axialmittig, die Trocknungspatrone durchsetzenden Kanal, **durch** welchen eine am Außentopf (1) gegengehaltene Schraube (7) zur Befestigung der Trocknungspatrone am Trocknergehäuse (11) hindurchgeführt ist;
e) der Verschluß ist an seinem Innenumfang mittels eines Sicherungselements (27; 59) lösbar am Innenzylinder (13) des Innentopfes (5) fixiert und trägt an seinem Außenumfang eine gegenüber der Innenwand des Außentopfes (1) wirkende Dichtung (25); und
f) als vormontierter Bestandteil befindet sich innerhalb des Innentopfes (5) eine das Trocknungsmittel (3) verdichtende Druckfeder (29).

2. Trocknungspatrone nach Anspruch 1, **gekennzeichnet durch** folgende Merkmale:
a) im Inneren des Innentopfes ist verschiebbar ein im Querschnitt gleichfalls ringscheibenförmig ausgebildeter Boden (31) eingesetzt, auf welchem das Trockenmittel (3) aufliegt;
b) als Verschluß des Innentopfes sind Durchführungen für die zu trocknende Luft enthaltender Deckel (19) vorgesehen, welcher lösbar am Innenzylinder des Innentopfes (5) fixiert ist; und
c) die Druckfeder (29) stützt sich einerseits an der dem Inneren des Innentopfes zugewandten Innenseite des Deckels (19) und andererseits an der zugewandten Unterseite des das Trockenmittel tragenden Bodens (31) ab, derart, daß die Druckkraft der Druckfeder auf den verschieblich im Innentopf geführten Boden (31) einwirkt.

3. Trocknungspatrone nach Anspruch 2, **dadurch gekennzeichnet, daß** zwischen Deckel (19) und Boden (31) im Bereich des Außenumfanges des Innentopfes (5) ein Vorfilter (39) für die zu trocknende Luft eingesetzt ist, und daß die Druckfeder (29) in einem der getrockneten Luft ausgesetzten Raum zwischen Deckel und Boden angeordnet ist;

4. Trocknungspatrone nach Anspruch 1, **dadurch gekennzeichnet, daß** im Inneren des Innentopfes als Verschluß verschiebbar ein Boden (57) eingesetzt ist, auf welchem das Trockenmittel (3) aufliegt, und daß sich die Druckfeder (29) einerseits an der Unterseite des Bodens (57) und andererseits am Innenzylinder des Innentopfes abstützt.

5. Trocknungspatrone nach einem der vorangehenden Ansprüche, **gekennzeichnet durch** eine vom Boden (31; 57) axial im Inneren des Innentopfes sich erstreckende Trennwand (33), welche das Innere des Innentopfes (5) in eine innere Kammer (35) und eine äußere Kammer (36) aufteilt, derart, daß die zu trocknende Luft zuerst die äußere Kammer und nachfolgend die innere Kammer durchströmt.

6. Trocknungspatrone nach einem der vorangehenden Ansprüche, **dadurch gekennzeichnet, daß** der Boden (57) gleichzeitig den Verschluß für den Innentopf bildet, und daß sich die Druckfeder (29) einerseits an der Unterseite des Bodens (57) und andererseits am Innenzylinder (13) des Innentopfes abstützt.

7. Trocknungspatrone nach einem der vorangehenden Ansprüche, **gekennzeichnet durch** eine vom Boden (31;57) axial sich erstreckende Trennwand (33), welche das Innere des Innentopfes (5) in eine innere Kammer (35) und eine äußere Kammer (36) aufteilt, derart, daß die zu trocknende Luft zuerst die äußere Kammer und nachfolgend die innere Kammer durchströmt.

## Claims

1. Drying cartridge for air drying installations, especially for compressed-air braking systems for vehicles, comprising a fastening screw passing therethrough and a closable bottom, comprising the features:
(a) the drying cartridge serving for attachment on a drier housing (11) of the air drying installation consists of an outer shell (1) and an inner shell (5) disposed in said outer shell (1) and containing the desiccant for the compressed air to be dried;
(b) on its side facing said drier housing (11), said inner shell is provided with a closure (19, 57),
**characterised by** the following features:
(c) said inner shell (5) is configured to present a cross-sectional area in the form of an annular disk such that inside said outer shell (1) an outer cylinder (15), which is applied against the inner side of said outer shell (1), is connected to a coaxially extending inner cylinder (13) by means of a roof section (17) applied on a roof section of said outer shell;
(d) said inner shell (13) encloses a passage passing through the drying cartridge in an axial central position, through which passage a screw (7) held by the other end on said outer shell (1) is passed for fastening the drying cartridge on said drier housing (11);
(e) said closure is detachably fixed by its inner periphery on said inner cylinder (13) of said inner shell (5) by means of a locking element (27; 59) and carries a seal (25) on its outer periphery, which is effective relative to the inner wall of said outer shell (1); and
(f) a compression spring (29) is provided as pre-assembled component inside said inner shell (5) for compressing said desiccant (3).

2. Drying cartridge according to Claim 1, **characterised by** the following features:
(a) a bottom (31) having equally a cross-sectional area in the form of an annular disk is disposed for sliding inside said inner shell, on which bottom said desiccant (3) is supported;
(b) a cover (19) is provided as closure of said inner shell, which presents through-holes for the air to be dried and which is detachably fixed on said inner cylinder of said inner shell (5); and
(c) said compression spring (29) is supported, on the one hand, on the inside of said cover (19), which faces the interior of said inner shell, and, on the other hand, on the facing underside of said bottom (31) carrying said desiccant, such that the compression force of said compression spring acts upon said bottom (31) guided for sliding in said inner shell.

3. Drying cartridge according to Claim 2, **characterised in that** a preliminary filter (39) for the air to be dried is inserted between said cover (19) and said bottom (31) in the zone of the outer periphery of said inner shell (5), and that said compression spring (29) is disposed in a space between said cover and said bottom, which is exposed to the dried air.

4. Drying cartridge according to Claim 1, **characterised in that** a bottom (57) is inserted as slidable closure inside said inner shell, on which bottom said desiccant rests, and that said compression spring (29) is supported, on the one hand, on the underside of said bottom (57) and, on the other hand, on the inner cylinder of said inner shell.

5. Drying cartridge according to any of the preceding Claims, **characterised by** a partitioning wall (33) extending axially from said bottom (31; 57) inside said inner shell, which subdivides the interior of said inner shell (5) into an inner chamber (35) and an outer chamber (36) such that the air to be dried flows first through said outer chamber and then through said inner chamber.

6. Drying cartridge according to any of the preceding Claims, **characterised in that** said bottom (57) constitutes at the same time the closure for said inner shell, and that said compression spring (29) is supported, on the one hand, on the underside of said bottom (57) and, on the other hand, on said inner cylinder (13) of said inner shell.

7. Drying cartridge according to any of the preceding Claims, **characterised by** a partitioning wall (33) extending axially from said bottom (31; 57) and subdividing the interior of said inner shell (5) into an inner chamber (35) and an outer chamber (36) such that the air to be dried flows first through said outer chamber and then through said inner chamber.

## Revendications

1. Cartouche de séchage pour installations de séchage de l'air, notamment pour systèmes de freinage à air comprimé de véhicules, comprenant un boulon d'attache qui la traverse ainsi qu'un fond fermable, présentant lès caractéristiques suivantes:
(a) la cartouche de séchage, qui sert à montage sur une boîte de sécheur (11) de l'installation de séchage de l'air, est composée d'un carter extérieur (1) et d'un carter intérieur (5) disposé dans ledit carter extérieur (1) et renfermant le produit desséchant pour l'air comprimé à sécher;
(b) de son côté en face de ladite boîte de sécheur (11), ledit carter intérieur est pourvu d'une fermeture (19, 57),
**caractérisé par** les caractéristiques suivantes:
(c) ledit carter intérieur (5) est configuré à un profil en travers sous forme d'un disque annulaire de façon, qu'à l'intérieur dudit carter extérieur (1) un cylindre extérieur (15), qui est appliqué contre la face intérieure dudit carter extérieur (1), est raccordé à un cylindre intérieur (13) à orientation coaxiale moyennant une partie de plafond (17) appliquée sur une partie de plafond dudit carter extérieur;
(d) ledit carter intérieur (13) renferme un passage traversant la cartouche de séchage en une position axiale centrale, par lequel un boulon (7), qui est tenu par l'autre extrémité sur ledit carter extérieur (1), est passé pour fixer la cartouche de séchage sur ladite boîte de sécheur (11);
(e) ladite fermeture est fixée de façon amovible par sa périphérie intérieure sur ledit cylindre intérieur (13) dudit carter intérieur (5) moyennant un élément de sécurité (27; 59) et porte une garniture d'étanchéité (25) sur sa périphérie, qui agit relativement à la paroi intérieure dudit carter extérieur (1); et
(f) un ressort de pression (29) est disposé en tant que composant de sous-groupe à l'intérieur dudit carter intérieur (5) à comprimer ledit produit desséchant (3).

2. Cartouche de séchage selon la revendication 1, **caractérisé par** les caractéristiques suivantes:
(a) un fond (31), également à un profil en travers sous forme d'un disque annulaire, est disposé pour déplacement à l'intérieur dudit carter intérieur, sur lequel fond reste ledit produit desséchant (3);
(b) un couvercle (19) est disposé en tant que fermeture dudit carter intérieur, qui présente des traversées pour l'air à sécher et qui est fixé de façon amovible sur ledit cylindre intérieur dudit carter intérieur (5); et
(c) ledit ressort de pression (29) s'appuie, d'un côté, sur la face intérieure dudit couvercle (19), qui se trouve en face de l'espace intérieur dudit carter intérieur, et, d'autre côté, sur la face inférieure dudit fond (31), qui se trouve en face et porte ledit produit desséchant, de façon, que l'effort de compression dudit ressort de pression agit sur ledit fond (31), qui est guidé pour un déplacement dans ledit carter intérieur.

3. Cartouche de séchage selon la revendication 2, **caractérisé en ce qu'**un filtre préparatoire (39) pour l'air à sécher est inséré entre ledit couvercle (19) et ledit fond (31) dans la zone de la périphérie extérieure dudit carter intérieur (5), et **en ce que** ledit ressort de pression (29) est disposé dans un espace entre ledit couvercle et ledit fond, qui est à exposer à l'air séché.

4. Cartouche de séchage selon la revendication 1, **caractérisé en ce qu'**un fond (57) est inséré en tant que fermeture déplaçable à l'intérieur dudit carter intérieur, sur lequel reste ledit produit desséchant, et **en ce que** ledit ressort de pression (29) s'appuie, d'un côté, sur la face inférieure dudit fond (57) et, d'autre côté, sur le cylindre intérieur dudit carter intérieur.

5. Cartouche de séchage selon une quelconque des revendications précédentes, **caractérisé par** une cloison (33), qui s'étend en sens axial à partir dudit fond (31; 57) à l'intérieur dudit carter intérieur et qui divise l'espace intérieur dudit carter intérieur (5) en une chambre intérieure (35) et une chambre extérieure (36) de façon, que l'air à sécher s'écoule d'abord à travers ladite chambre extérieure et ensuite à travers ladite chambre intérieure.

6. Cartouche de séchage selon une quelconque des revendications précédentes, **caractérisé en ce que** ledit fond (57) constitue, en même temps, la fermeture pour ledit carter intérieur, et **en ce que** ledit ressort de pression (29) s'appuie, d'un côté, sur la face inférieure dudit fond (57) et, d'autre côté, sur ledit cylindre intérieur (13) dudit carter intérieur.

7. Cartouche de séchage selon une quelconque des revendications précédentes, **caractérisé par** une cloison (33), qui s'étend en sens axial à partir dudit fond (31; 57) et divise l'espace intérieur dudit carter intérieur (5) en une chambre intérieure (35) et une chambre extérieure (36) de façon que l'air à sécher s'écoule d'abord à travers ladite chambre extérieure et ensuite à travers ladite chambre intérieure.
